# DEMANDE DE BREVET EUROPEEN

(11) **EP 4 012 597 A1**
(43) Date de publication de la demande: **15.06.2022**
(21) Numéro de dépôt: 21211886.3
(22) Date de dépôt: 02.12.2021
(51) Int. Cl.: G06F 40/166, G06F 3/023, G06F 40/274, G06F 3/04886

(54) **PROCEDE D'AIDE A LA SAISIE DE CARACTERES SUR UNE INTERFACE UTILISATEUR**

(30) Priorité: 09.12.2020 FR 2012904
(71) Demandeur: SNCF Voyageurs, 93200 Saint-Denis (FR)
(72) Inventeur: RAVALLEC, Jérôme, 44690 CHATEAU THEBAUD (FR)
(74) Mandataire: IPAZ

(57) **Abrégé**

L'invention concerne un procédé (100), mis en œuvre par ordinateur, d'aide à la saisie automatique de chaînes de caractères sur une interface utilisateur comprenant une zone de saisie, ledit procédé (100) comprenant :
- l'affichage (102), dans une zone d'affichage, d'au moins une chaîne de plusieurs caractères, dite mot proposé,
- au moins une itération d'une étape, dite de saisie (104), comprenant les étapes :
∘ sélection (106), par un utilisateur, d'une position dans un mot proposé, et
∘ saisie automatique (108), dans la zone de saisie, de tous les caractères se trouvant à gauche ou à droite de la position sélectionnée dans ledit mot proposé.

## Description

### Domaine technique

La présente invention concerne un procédé d'aide à la saisie de caractères sur une interface utilisateur. L'invention concerne également un programme d'ordinateur et un dispositif mettant en œuvre un tel procédé.

Le domaine de l'invention est celui de l'aide à la saisie automatique sur des interfaces utilisateurs numériques, et en particulier sur des interfaces tactiles.

### Etat de la technique

On connaît des procédés d'aide à la saisie automatique de caractères comportant une liste de propositions d'une ou plusieurs chaînes de caractères préenregistrées. Ces procédés sont fonctionnels, mais posent différents problèmes, notamment :
- de précision et de choix, car la liste de propositions ne comporte pas forcément la solution désirée par l'utilisateur,
- d'efficacité car si la liste ne comporte pas la solution désirée, alors l'utilisateur est obligé de saisir manuellement les chaînes de caractères, ce qui engendre une perte de temps,
- de lisibilité car la liste de propositions peut être très conséquente ce qui peut engendrer une perte de temps dans la sélection.

Un but de la présente invention est de remédier à au moins un des inconvénients précités.

Un autre but de l'invention est de proposer une solution d'aide à la saisie automatique de caractères plus précis.

Un autre but de l'invention est de proposer une solution d'aide à la saisie plus efficace, et donc plus rapide.

Un autre but de l'invention est de proposer un procédé d'aide à la saisie plus lisible.

Encore un autre but de la présente invention est de proposer une solution d'aide à la saisie permettant une plus grande flexibilité dans la saisie de caractères sur interface utilisateur.

### Exposé de l'invention

L'invention permet d'atteindre au moins un des buts précités par un procédé, mis en œuvre par ordinateur, d'aide à la saisie automatique de chaînes de caractères sur une interface utilisateur comprenant une zone de saisie, ledit procédé comprenant :
- l'affichage, dans une zone d'affichage, d'au moins une chaîne de plusieurs caractères, dite mot proposé,
- au moins une itération d'une étape, dite de saisie, comprenant les étapes :
   ∘ sélection, par un utilisateur, d'une position dans un mot proposé, et
   ∘ saisie automatique, dans la zone de saisie, de tous les caractères se trouvant d'un côté ou de l'autre de la position sélectionnée dans ledit mot proposé.

Ainsi, le procédé selon l'invention permet la saisie automatique d'au moins un mot ou une portion de mot. La saisie suivant le procédé selon l'invention limite donc les erreurs de saisie manuelle, ce qui permet aussi un gain de temps.

Ensuite, suivant le procédé selon l'invention, aucune liste « préformatée » de solutions à sélectionner n'est enregistrée. Par conséquent, l'utilisateur n'a pas besoin de rechercher la chaîne d'un ou plusieurs caractères souhaités dans une liste longue et peu lisible, ce qui permet un réel gain de temps dans la saisie des caractères. La saisie automatique est donc plus lisible et donc améliorée.

Le procédé selon l'invention est plus efficace car la saisie automatique est toujours effective. Cela permet donc un gain de temps dans la saisie des données puisque celle-ci contient toujours une saisie automatique d'un ou plusieurs caractères.

Dans le procédé suivant l'invention, les mots ou portions de mots affichés ne sont pas forcément saisis automatiquement dans la zone de saisie. Seuls les caractères sélectionnés suite à l'étape de sélection sont saisis dans la zone de saisie. Le procédé selon l'invention est donc plus flexible.

Le procédé selon l'invention est aussi plus précis car seuls les caractères ou mots d'intérêts peuvent être saisi automatiquement.

Dans le présent document, par « mot » on entend une chaine de caractères composée d'un ou plusieurs caractères ininterrompus. Par conséquent, le terme mot dans la présente demande n'est pas forcément associé à une lettre ou groupe de lettres comprenant un sens dans le langage. En effet, une portion de mot est assimilée aussi à un mot dans la présente demande. Une seule lettre peut aussi être assimilée à un mot.

La chaine de caractères formant un mot peut comprendre au moins une lettre et/ou au moins un chiffre et/ou au moins un caractère spécial. Ainsi, un caractère peut être une lettre, un chiffre ou un caractère spécial.

Par « portion de mot » on entend un mot qui a été tronqué ou coupé, par exemple suite à l'étape de sélection.

Une chaine de caractères peut être un mot ou une portion de mot, c'est-à-dire être un mot tronqué.

Par « d'un côté ou de l'autre » on entend à droite ou à gauche ou en bas ou en haut de la position sélectionnée dans ledit mot proposé.

Suivant un exemple de réalisation, le procédé selon l'invention peut être un procédé d'aide à la saisie automatique d'adresse mail.

Le procédé selon l'invention est donc adapté à la saisie automatique de mots et combinaisons de mots inusuelles car les combinaisons de mots pour entrer une adresse mail sont multiples. Par exemple, le procédé selon l'invention peut saisir automatiquement des adresses mails comportant des mots tronqués.

Suivant d'autres exemples de réalisation, le procédé selon l'invention peut être un procédé d'aide à la saisie automatique d'adresse postale ou un procédé d'aide à la saisie de données dans une zone de saisie, par exemple dans des zones de saisie brute comme une zone de traitement de texte, ou dans des formulaires à renseigner comprenant des zones de saisie comme des formulaires administratifs ou des interfaces d'achat.

Lorsque la position sélectionnée correspond à la position d'un caractère du mot affiché, alors l'étape de saisie automatique peut comprendre en outre une saisie dudit caractère sélectionné dans la zone de saisie.

Ainsi, le caractère sélectionné est toujours saisi automatiquement ainsi que tous les caractères se trouvant à gauche ou à droite ou en haut ou en bas dudit caractère sélection dans ledit mot proposé. Cela permet de ne sélectionner que les caractères d'intérêts, c'est-à-dire celles que l'on souhaite saisir, dans le mot proposé.

De préférence, chaque caractère du mot proposé peut être affiché de manière sélectionnable, par exemple sous la forme d'un bouton, et l'étape de sélection d'une position dans le mot proposé peut comprendre une sélection d'un caractère dudit mot proposé.

Ainsi, le procédé selon l'invention propose une interaction homme-machine dans laquelle un ou plusieurs utilisateurs peuvent appuyer directement sur les caractères des mots pour saisir automatiquement le mot ou la portion de mot qui les intéressent. De plus, la sélection d'une position dans le mot proposé est plus simple car il est plus simple et plus rapide de sélectionner un caractère, qu'une position dans un mot.

Le procédé selon l'invention est donc simple à mettre en œuvre et très adaptée à une interface tactile, sans être limité à une interface tactile.

La sélection d'un caractère peut se faire de manière tactile sur une interface tactile, via un pavé directionnel tactile ou mécanique, et plus généralement tout moyen de sélection tactile ou mécanique.

Pour au moins une chaine de caractère, l'étape de sélection d'une position dans le mot proposé peut comprendre un positionnement d'un curseur dans ledit mot proposé.

Ainsi, le procédé peut utiliser un curseur, ce qui permet d'avoir une sélection mobile et simplifiée.

Par exemple, le curseur peut se déplacer entre les caractères. Dans ce cas, l'étape de sélection sélectionnera tous les caractères à droite ou à gauche ou en haut ou en bas de cette position. Dans un autre exemple, le procédé selon l'invention peut sélectionner plusieurs chaines de caractères. Par exemple, si les mots affichés sont « ma petite rose », la position du curseur au niveau de l'espace entre les mots « petite » et « rose » peut permettre de saisir automatiquement les mots « ma » et « petite ».

Le curseur peut se déplacer de caractère en caractère. Par exemple, cela peut permettre d'exclure un ou plusieurs caractères appartenant à une suite de mots ou un mot. L'étape de sélection est donc plus flexible.

Le curseur peut être déplacé par sélection au niveau de la zone d'affichage.

Cela permet un réel gain de temps car la saisie est très rapide. Par exemple, si la zone d'affichage est tactile, l'utilisateur peut se déplacer dans la zone d'affichage tout en gardant un contact avec ladite zone d'affichage.

La sélection peut se faire par contact de l'utilisateur sur la zone d'affichage lorsque la zone d'affichage est affichée sur un écran tactile ou par commande via un pavé directionnel mécanique.

Le curseur peut être déplacé grâce à un pavé directionnel tactile ou mécanique.

Lorsque la position est sélectionnée avec le curseur, la saisie automatique peut être enclenchée de différentes manières.

La saisie automatique peut être enclenchée par contact de l'utilisateur sur la zone d'affichage lorsque la zone d'affichage est affichée sur un écran tactile ou par commande via un clavier alphanumérique.

Par exemple, la commande de saisie automatique peut être effective par pression (au moins une pression) de l'utilisateur sur l'écran et/ou par sélection d'un bouton sur un clavier alphanumérique tactile ou mécanique. Le bouton sélectionné peut être, par exemple, la touche « entrée » ou « espace » du clavier alphanumérique. Si l'écran est tactile, l'utilisateur peut aussi effectuer la saisie automatique en sélectionnant le curseur positionné à la position sélectionnée, par exemple, en appuyant dessus.

Dans une autre variante et lorsque l'écran est tactile, la saisie automatique peut aussi être enclenchée lorsque l'utilisateur reste un certain temps sur la position sélectionnée, par exemple 2 à 3 secondes ou plus.

Dans une autre variante et lorsque l'écran est tactile, la saisie automatique peut être enclenchée lorsque l'utilisateur reste un certain temps, par exemple 2 à 3 secondes ou plus, sur la position sélectionnée et qu'il arrête sa sélection, par exemple lorsqu'il enlève son doigt ou son stylet dudit écran.

Le procédé selon l'invention peut comprendre plusieurs itérations de l'étape de saisie, par exemple, lorsque plusieurs chaînes de caractères sont affichées à l'étape d'affichage.

Le procédé selon l'invention peut donc permettre de saisir, à la suite, plusieurs mots, portions de mot ou lettres ou symboles d'intérêts. Le ou les mots saisis seront ainsi une combinaison des chaînes de caractères sélectionnées l'une après l'autre à l'étape de sélection.

La saisie automatique suivant le procédé selon l'invention est donc souple, et multiple, c'est-à-dire qu'elle fonctionne aussi pour saisir automatiquement des mots ou suites de mots inusuels.

Deux étapes de saisie peuvent être consécutives ou séparées par une saisie de caractère suivant une autre méthode, par exemple au travers d'un clavier (i.e. méthode de saisie manuelle). Ainsi, l'utilisateur peut sélectionner une première chaine de caractère selon le procédé selon l'invention, puis saisir un ou plus caractère sans utiliser le procédé selon l'invention, puis saisir à nouveau une chaîne de caractère avec le procédé selon l'invention.

Le procédé selon l'invention peut comprendre, avant l'étape d'affichage, une étape de saisie préalable, d'au moins un mot pouvant être affiché lors de l'étape d'affichage en tant que mot proposé.

Le mot saisi ou les mots saisis à l'étape de saisie préalable peuvent être affichés dans une zone de saisie préalable. La zone de saisie préalable peut être distincte ou comprise dans la zone de saisie. Le mot ou les mots saisis dans la zone de saisie préalable peuvent ensuite être affichés dans la zone d'affichage.

Ainsi, l'au moins un mot proposé peut être connu par l'ordinateur mettant œuvre ledit procédé.

De préférence, l'au moins un mot peut être saisi au préalable. Par exemple, l'au moins un mot proposé peut être mémorisé dans une base de données connectée à l'appareil ou le dispositif mettant en œuvre ledit procédé.

Par conséquent, l'étape de saisie préalable peut avoir été effectuée quelques instants avant l'étape d'affichage ou clôturée depuis un certain temps.

De préférence, les mots saisis lors de l'étape de saisie préalable peuvent être mémorisés dans une base de données. Le procédé selon l'invention peut comprendre une consultation de cette base de données avant l'étape d'affichage. Cette consultation peut, par exemple, être réalisée en entrant dans la zone de saisie préalable, un numéro, un identifiant ou des mots clés.

Le ou les mots saisis lors de l'étape de saisie préalable peuvent donc être disponibles et récupérables, par exemple à partir d'un dossier attaché à une personne.

Le procédé selon l'invention peut comprendre, préalablement à l'étape d'affichage, une étape de saisie, par l'utilisateur, d'au moins un caractère dans la zone de saisie, et en ce qu'au moins un mot proposé est déduit à partir dudit au moins un caractère saisi.

Le procédé selon l'invention peut ainsi proposer ou prédire des mots en fonction des caractères saisis. Cette proposition de mots peut être fonction des caractères saisis dans l'étape préalable ou de caractères directement saisis dans la zone de saisie. Le mot sélectionné dans les mots proposés ou prédits peut ensuite être affiché dans la zone d'affichage à l'étape d'affichage. Suivant le procédé selon l'invention, il n'est pas nécessaire d'entrer en entier et manuellement le mot qui sera affiché dans la zone de saisie.

Cette étape est aussi fonctionnelle lorsque le mot saisi dans l'étape de saisie préalable a été saisi partiellement, c'est-à-dire quand le mot saisi n'a pas de signification dans le langage écrit ou oral (i.e. le mot saisi dans l'étape de saisie préalable n'a pas été écrit en entier). Suivant la prédiction ou proposition de mots, le procédé selon l'invention peut compléter automatiquement la zone de saisie préalable et ensuite afficher le mot sélectionné issu des mots suggérés dans la zone de saisie. Le procédé selon l'invention peut enregistrer sur une base de données le mot saisi dans la zone de saisie préalable.

Dans les différents cas, la proposition de mots permet une saisie automatique de mots dans la zone de saisie préalable et/ou directement dans la zone d'affichage. Cela limite les entrées manuelles de caractères dans la zone de saisie et/ou dans la zone de saisie préalable, ce qui améliore l'efficacité de la saisie automatique.

Le procédé selon l'invention peut comprendre une étape de récupération, avant l'étape d'affichage, de l'au moins un mot proposé sur une base de données.

La base de données peut être distante, par exemple enregistrée sur le « Cloud » ou sur un serveur connecté à l'appareil ou le dispositif mettant en œuvre le procédé selon l'invention.

La base de données peut être accessible au travers d'un réseau de communication, par exemple de type internet, par une connexion filaire ou sans fil de type WIFI ou Bluetooth.

L'étape de récupération peut être réalisée en entrant un identifiant, numéro ou mot clés, ou dépendre des données personnelles de l'utilisateur ou de la personne concernée.

L'au moins un mot proposé et/ou affiché et/ou saisi au préalable peut comprendre au moins une dénomination de l'utilisateur.

De préférence, le procédé selon l'invention peut comprendre une étape de conversion :
- de toutes les majuscules de l'au moins une chaîne de plusieurs caractères en minuscule, et/ou
- de tous les caractères spéciaux de l'au moins une chaîne de plusieurs caractères en espace.

Les caractères spéciaux peuvent être au moins une apostrophe et/ou au moins un trait d'union, et/ou au moins un espace. Les nombres peuvent être conservés.

Le procédé selon l'invention est donc capable de recoder et retranscrire des caractères, et/ou caractères spéciaux ou des mots en vue de ne conserver que des caractères ou mots brutes.

Le procédé selon l'invention peut donc comprendre un affichage et/ou une saisie automatique qui peut se dissocier de la casse informatique et/ou être moins sensible à la casse.

Cela peut permettre de coder l'information de manière plus simple et donc sur moins d'espace, ce qui permet d'avoir un procédé plus rapide. Par exemple, cela permet d'afficher et/ou de saisir automatiquement un mot ou des mots ou un ou plusieurs caractères de manière plus rapide.

Le procédé selon l'invention permet ainsi de séparer de manière distincte plusieurs mots ou portions de mots. Cette séparation permet d'améliorer l'étape de sélection automatique en ciblant de manière plus précise le ou les mots ou caractères ou portions de mots qui seront saisis automatiquement. L'affichage des mots proposés est plus lisible.

Le procédé selon l'invention peut comprendre une étape manuelle de suppression et/ou de réécriture d'un ou plusieurs caractères saisis automatiquement à l'étape de saisie automatique.

Par conséquent, le procédé selon l'invention peut corriger des erreurs saisies automatiquement suite, par exemple, à une erreur intervenue dans l'étape de sélection.

En outre le procédé selon l'invention permet de saisir, de modifier ou de supprimer, manuellement, un ou plusieurs caractères ou mots directement dans la zone de saisie.

Par conséquent, le procédé selon l'invention permet une plus grande liberté de saisie et une possibilité de personnalisation de la saisie, en plus de la saisie automatique.

Selon un autre aspect de l'invention, il est proposé un programme informatique comprenant des instructions exécutables par un dispositif de traitement de données, qui, lorsqu'elles sont exécutées mettent en œuvre toutes les étapes du procédé selon l'invention.

Le programme informatique peut être dans tout langage informatique tel que C, C++, JAVA, Python, langage machine, etc.

Selon un autre aspect de l'invention, il est proposé un dispositif de traitement de données comprenant des moyens configurés pour mettre en œuvre toutes les étapes du procédé selon l'invention.

Le dispositif selon l'invention confère les mêmes avantages que ceux énumérés pour le procédé selon l'invention

Le dispositif de traitement de données peut être un PC, un smartphone, une tablette, une unité de calcul ou tout autre appareil informatique et/ou électronique.

En particulier, le dispositif de traitement de données peut être une carte électronique composant au moins un composant analogique et/ou au moins une composant numérique.

Dans un mode de réalisation particulier, le dispositif de traitement de données peut être un processeur, une puce, un calculateur, etc.

Suivant un mode de réalisation, le dispositif selon l'invention peut comprendre :
- un module d'affichage configuré pour afficher l'au moins une chaîne de caractère, dit mot proposé, dans une zone d'affichage,
- un module de saisie configuré pour saisir au moins une chaîne de plusieurs caractère, et comprenant :
   ∘ un module de sélection configuré pour sélectionner une position dans un mot proposé par un utilisateur, et
   ∘ un module de saisie automatique, configuré pour saisir automatiquement, dans la zone de saisie, tous les caractères se trouvant d'un côté ou de l'autre de la position sélectionnée dans l'au moins un mot proposé.

Chaque module peut être un moyen de calcul, tel qu'un processeur, une unité de traitement, une puce électrique, programmé pour mettre en œuvre la fonction qui lui est attribuée.

Le dispositif selon l'invention peut aussi comprendre un module de saisie préalable configuré pour saisir, préalablement à l'affichage du mot proposé, au moins un mot pouvant être affiché lors de l'étape d'affichage en tant que mot proposé. Le module de saisie préalable peut être distinct ou compris dans le module de saisie.

Le dispositif selon l'invention peut comprendre un module de prédiction ou de suggestion, agencé pour déduire au moins un mot proposé à partir d'au moins un caractère saisi par le module de saisie et/ou le module de saisie préalable.

Le dispositif selon l'invention peut comprendre un module de conversion configuré pour convertir :
- toutes les majuscules de l'au moins une chaîne de plusieurs caractères en minuscule, et/ou
- tous les caractères spéciaux de l'au moins une chaîne de plusieurs caractères en espace.

Le module de conversion peut être compris dans le module de saisie ou être distinct dudit module de saisie.

Le dispositif selon l'invention peut comprendre un module de communication agencé pour récupérer l'au moins un mot proposé sur une base de données.

Le module de saisie et/ou de saisie préalable peut être configuré pour supprimer et/ou écrire un ou plusieurs caractères saisis automatiquement ou manuellement.

Le dispositif peut comprendre un module de positionnement agencé pour positionner un curseur dans un mot proposé, ladite position du curseur correspondant à la position sélectionnée dans ledit mot proposé. Le module de position peut être compris dans ou être confondu avec le module de sélection.

Selon un autre aspect de l'invention, il est proposé un équipement comprenant :
- une interface utilisateur comprenant une zone de saisie, et
- un dispositif selon l'invention pour assister à la saisie automatique sur ladite interface.

L'équipement confère les mêmes avantages que ceux énumérés pour le procédé selon l'invention.

L'interface utilisateur peut comprendre un écran. L'écran peut être tactile.

L'interface utilisateur peut comprendre un moyen pour saisir des caractères. Le moyen pour saisir des caractères peut être un clavier, par exemple un clavier tactile ou manuel. De préférence, le clavier peut être un clavier alphanumérique.

L'interface peut comprendre, pour chaque caractère de l'au moins un mot proposé affiché dans la zone d'affichage, un bouton agencé pour être enclenché par l'utilisateur.

L'interface peut comprendre un moyen pour sélectionner une position dans l'au moins un mot proposé.

Le moyen pour sélectionner une position peut être un pavé numérique, par exemple un pavé directionnel d'un clavier manuel ou tactile, et/ou une souris d'ordinateur, et/ou un curseur tactile se déplaçant au touché de l'utilisateur sur un écran tactile.

### Brève description des dessins

D'autres avantages et particularités de l'invention apparaîtront à la lecture de la description détaillée de mises en œuvre et de modes de réalisation nullement limitatifs, et des dessins annexés suivants.
La FIGURE 1 est une représentation schématique d'un premier exemple de réalisation non limitatif d'un procédé selon l'invention ;
La FIGURE 2 une représentation schématique d'un second exemple de réalisation non limitatif d'un procédé selon l'invention ;
La FIGURE 3 est un représentation schématique d'un premier exemple d'une interface utilisateur sur laquelle est mise en œuvre un procédé selon l'invention ;
La FIGURE 4 est un représentation schématique d'un second exemple d'une interface utilisateur sur laquelle est mise en œuvre un procédé selon l'invention ;
La FIGURE 5 est un représentation schématique d'un troisième exemple d'une interface utilisateur sur laquelle est mise en œuvre un procédé selon l'invention ;
La FIGURE 6 est un représentation schématique d'un premier exemple d'un équipement selon l'invention.

### Description détaillée des figures

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détail structurel, ou avec seulement une partie des détails structurels si cette partie uniquement est suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

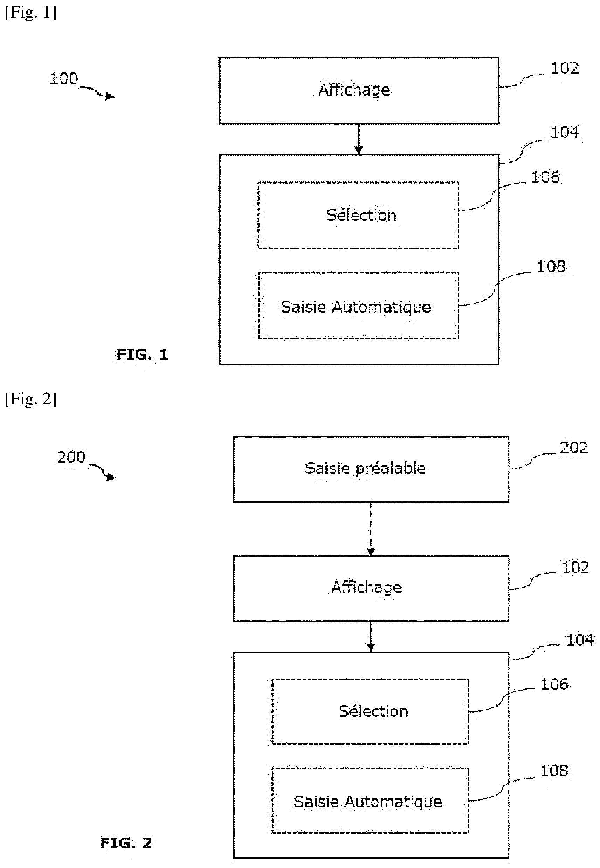

La FIGURE 1 est une représentation schématique d'un exemple de réalisation non limitatif d'un procédé 100 selon l'invention.

Le procédé 100 est mis en œuvre par ordinateur. En particulier, le procédé 100 est un procédé d'aide à la saisie automatique de chaînes de caractères sur une interface utilisateur comprenant une zone de saisie.

Le procédé 100 illustré en FIGURE 1 comprend les étapes suivantes :
- affichage 102, dans une zone d'affichage, d'au moins une chaîne de plusieurs caractères, dite mot proposé,
- au moins une itération d'une étape, dite de saisie 104, comprenant les étapes :
   ∘ sélection 106, par un utilisateur, d'une position dans un mot proposé, et
   ∘ saisie automatique 108, dans la zone de saisie, de tous les caractères se trouvant d'un côté ou de l'autre de la position sélectionnée dans ledit mot proposé.

L'interface utilisateur est une interface homme-machine aussi appelée interface logicielle.

L'au moins un mot proposé peut comprendre des majuscules, et/ou des minuscules et/ou des caractères spéciaux, et/ou des espaces et/ou des chiffres et/ou des particules.

La zone de saisie est une zone qui est configurée pour saisir ou entrer un ou plusieurs caractères automatiquement et/ou manuellement.

Lorsque l'étape de saisie automatique 108 est réalisée, une nouvelle itération de l'étape de saisie 102 peut être réalisée.

L'itération de l'étape de saisie 102 recommence en totalité si un utilisateur active l'étape de sélection 106 en sélectionnant à nouveau une position dans l'au moins un mot proposé.

La position sélectionnée peut être similaire à celle sélectionnée à l'itération précédente. Dans ce cas, il y aura une répétition des chaînes de caractères ou mots sélectionnés.

Dans une autre variante, la position sélectionnée à l'étape de sélection 106 peut être différente de l'itération précédente. Dans ce cas, les mots ou portions de mots saisis automatiquement dans la zone de saisie correspondront à un assemblage des chaînes de caractères ou mots saisis automatiquement. Par conséquent, une multitude de combinaisons peuvent être saisies automatiquement, même des mots ou suites de mots inusuels, c'est-à-dire peu communs.

En outre, entre chaque itération de l'étape de saisie 102, l'utilisateur peut saisir manuellement des caractères ou portions de caractères ou mots, sans arrêter le fonctionnement du procédé 100. Par exemple, l'utilisateur peut ajouter un chiffre, un caractère spécial tel qu'un arobase ou un hashtag manuellement avant d'enclencher une nouvelle itération de l'étape saisie 104.

La FIGURE 2 est une représentation schématique d'un exemple de réalisation non limitatif d'un procédé 200 selon l'invention.

Le procédé illustré en FIGURE 2 comprend toutes les étapes du procédé 100 illustré en FIGURE 1.

Le procédé 200 comprend en outre une étape de saisie préalable 202, réalisée avant l'étape d'affichage 102, d'au moins un mot pouvant être affiché lors de l'étape d'affichage 102 en tant que mot proposé. Dans ce cas, le procédé 200 affiche à l'étape d'affichage un ou plusieurs mots ou portions de mots qui sont connus, c'est-à-dire qui ont été saisis à un instant quelconque avant l'étape d'affichage 102. Cet instant peut être de quelques secondes ou être beaucoup plus ancien, par exemple il peut se compter en heures, ou en mois, ou en années.

L'au moins un mot peut être récupéré à partir d'une base de données. Dans ce cas, le procédé 200 est configuré pour réaliser une étape de récupération, avant l'étape d'affichage, de l'au moins un mot proposé sur une base de données. La base de données peut être enregistrée dans le « Cloud », ou un serveur distant, ou serveur local, en communication avec le dispositif mettant en œuvre le procédé 200. L'étape de récupération peut être réalisée en entrant un identifiant, numéro ou mot clés, ou dépendre des données personnelles de l'utilisateur.

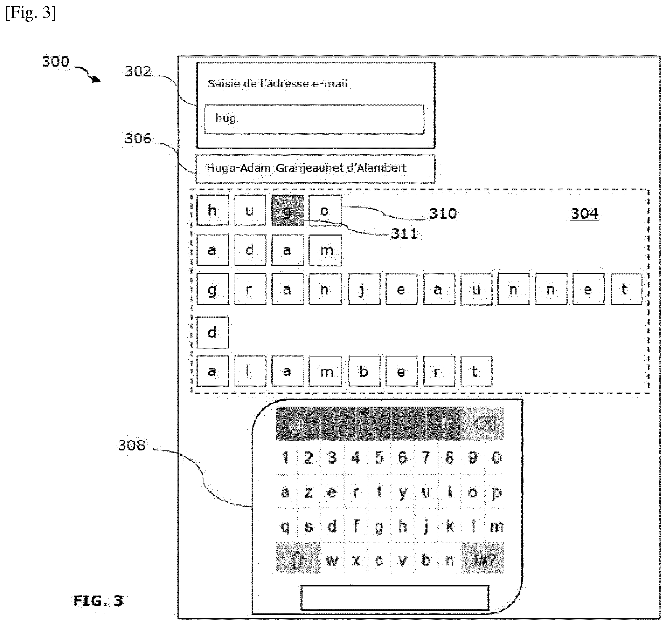

La FIGURE 3 est une première représentation schématique d'un exemple d'interface utilisateur 300 sur laquelle est mise en œuvre un procédé selon l'invention, tel que par exemple le procédé 100 ou 200 décrit plus haut.

De manière non limitative, le procédé 100, 200 mis en œuvre sur l'interface utilisateur 300 illustrée en FIGURE 3, est un procédé d'aide à la saisie automatique d'adresse mail, par exemple sur une borne de vente de billet de train ou véhicule ferroviaire.

L'interface utilisateur 300 est affichée sur un moyen d'affichage, par exemple un écran. A titre d'exemple non limitatif, l'écran est tactile.

L'interface utilisateur 300 comprend une zone de saisie 302.

L'interface utilisateur 300 comprend aussi une zone d'affichage 304 dans laquelle plusieurs chaines de caractères, notamment plusieurs mots sont affichés.

L'interface utilisateur 300 comprend optionnellement une zone de saisie préalable 306 dans laquelle un ou plusieurs mots peuvent être rentrés à l'étape de saisie préalable 202 du procédé 200.

Optionnellement, l'interface utilisateur 300 comprend aussi une zone d'entrée 308 dans laquelle l'utilisateur peut sélectionner manuellement des caractères pour être écrits dans la zone de saisie 302.

Dans une variante non illustrée, la zone d'entrée 308 et la zone de saisie préalable 306 sont comprises dans la zone de saisie 302 et/ou appartiennent à la zone de saisie 302.

La zone d'entrée 308 est un clavier alphanumérique. La zone d'entrée est agencée pour être activée par l'utilisateur. A titre d'exemple non limitatif, le clavier alphanumérique illustré dans la zone d'entrée 308 est tactile. Chaque touche activée dans la zone d'entrée 308 est écrite dans la zone de saisie 302. Les caractères ou symboles ou chiffres saisis dans la zone d'entrée sont donc retranscrits de manière individuelle et manuellement. A titre d'exemple non limitatif, le clavier illustré en Figure 3 est un clavier de type Azerty. Bien entendu, dans d'autres variantes non illustrées, le clavier peut être de type Qwerty, ou Qwertz, notamment lorsque le procédé est utilisé pour saisir des mots automatiquement selon l'alphabet « latin ». Bien entendu, le clavier utilisé dans la zone d'entrée 308 peut être un clavier permettant l'écriture de langue cyrillique, arabe, grec, hébreu, ou bien des caractères de type chinois, japonais, coréen, etc.

Dans le cas illustré en FIGURE 3, une suite de mots a été rentrée à l'étape préalable 202 dans la zone de saisie préalable 306. La suite de mots comprend une dénomination d'une personne. En particulier, le nom et le prénom de l'utilisateur sont affichés dans la zone de saisie préalable 306. La dénomination complète de l'utilisateur est affichée dans la zone d'affichage 304.

La dénomination saisie dans la zone de saisie préalable est entièrement affichée dans la zone d'affichage 304. Les mots réécrits dans la zone d'affichage 304 sont entièrement retranscrits en minuscule. Les caractères spéciaux, tels que l'apostrophe de « d'Alambert » et le trait d'union entre les prénoms « Hugo » et « Adam » ont été retranscrits en tant qu'espace dans la zone d'affichage 304, créant ainsi un espace entre les mots dans la zone d'affichage 304. Ainsi, le procédé selon l'invention 100, 200 mis en œuvre sur l'interface utilisateur 300 illustrée en FIGURE 3 est configuré pour réaliser une étape de conversion :
- de toutes les majuscules de l'au moins une chaîne de plusieurs caractères en minuscule, et
- de tous les caractères spéciaux de l'au moins une chaîne de plusieurs caractères en espace.

Chaque caractère des mots de la dénomination est affiché de manière sélectionnable, notamment sous la forme de bouton 310. A titre d'exemple non limitatif, le bouton de la lettre « g » 311 du mot « hugo » est sélectionnée par l'utilisateur dans la zone d'affichage. Ainsi, dans une première variante, le caractère sélectionné ainsi que tous les caractères, ici « h » et « u », se trouvant avant dans le mot « Hugo », c'est-à-dire positionnés à gauche de la positionné sélectionnée, sont saisis automatiquement. Dans une autre variante non illustrée, cela pourrait être le caractère sélectionné ainsi que tous les caractères se trouvant après, par exemple le « o », dans le mot « hugo ». Dans une autre variante non illustrée, cela pourrait être tous les caractères se trouvant en haut ou en bas de la position sélectionnée. Ainsi, et de manière non limitative, l'étape de sélection 106 illustrée en FIGURE 3 comprend une sélection d'un caractère d'un des mots affiché dans la zone d'affichage 304. A titre d'exemple, non limitatif, la position sélectionnée par l'utilisateur en FIGURE 3 correspond à un caractère sélectionné 311 dans la suite de mots illustrée dans la zone d'affichage 306. La sélection de la lettre « g » a été réalisé par contact d'une partie du corps de l'utilisateur sur le bouton 310, 311 affichant la lettre « g ».

Dans une variante non illustrée, tous les mots et caractères se trouvant à droite ou à gauche ou en haut ou en bas de la position sélectionnée pourraient être saisis automatiquement. Cela permettrait, par exemple de saisir en une seule fois, des caractères appartenant à des mots différents.

La zone de saisie, notamment le clavier de la zone d'entrée 308 comprend des boutons pour supprimer et/ou écrire un ou plusieurs caractères saisis automatiquement ou manuellement. De cette manière, l'utilisateur peut corriger des erreurs de saisie manuelle et/ou automatique.

Le procédé selon l'invention 100, 200 mis en œuvre sur l'interface utilisateur 300 est configuré pour réaliser une étape de suppression et/ou de réécriture d'un ou plusieurs caractères saisis automatiquement à l'étape de saisie automatique par activation de la zone de saisie, en particulier de la zone d'entrée.

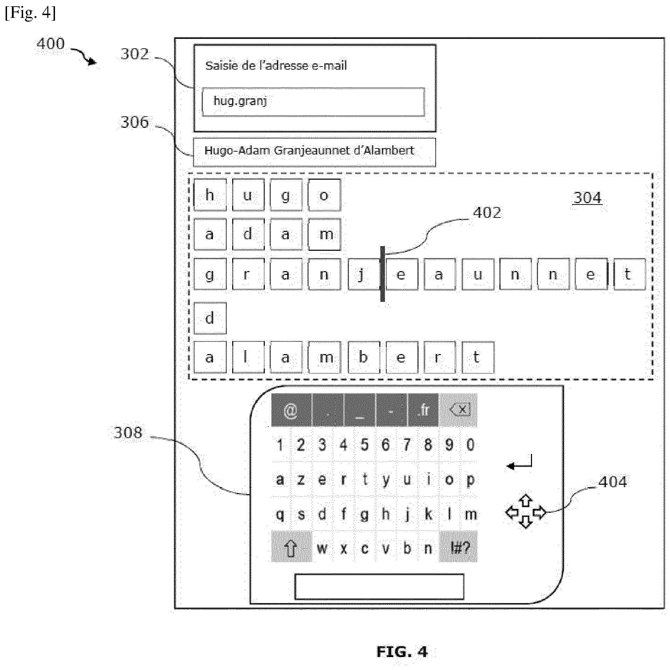

La FIGURE 4 est une deuxième représentation schématique d'un exemple d'interface utilisateur 400 sur laquelle est mise en œuvre un procédé selon l'invention, tel que par exemple le procédé 100 ou 200 décrit plus haut.

L'interface utilisateur 400 de la FIGURE 4 comprend tous les éléments de l'interface utilisateur de la FIGURE 3.

La zone d'entrée 308 comprend un pavé directionnel 404.

L'interface utilisateur illustrée en FIGURE 4 comprend en outre un curseur 402 agencé pour se déplacer entre les lettres et sur les lettres des mots affichés dans la zone d'affichage 304.

Ainsi, l'étape de sélection 104 du procédé selon l'invention 100, 200 mis en œuvre sur l'interface utilisateur 400 comprend un positionnement du curseur 402 dans les mots proposés affichés dans la zone d'affichage 304.

Le curseur 402 illustré en FIGURE 4 se déplace entre les caractères et/ou de caractère en caractère.

Dans le cas illustré en FIGURE 4, le curseur 402 est déplacé grâce à un pavé directionnel tactile. Ainsi, le curseur peut se déplacer soit au niveau du pavé directionnel 404 du clavier de la zone d'entrée 308 et/ou directement par mouvement du curseur 402 au niveau de la zone d'affichage 304. Dans ce dernier cas, le mouvement du curseur peut être induit par une action de l'utilisateur sur la zone d'affichage 304 (i.e. contact avec le doit de l'utilisateur) provoquant ainsi le mouvement du curseur 402. Dans une variante non illustrée, le curseur 402 est déplacé grâce à un pavé directionnel mécanique.

De manière non limitative, les mots « hug » et « granj » sont séparés par un point dans la zone de saisie 302. A titre d'exemple, le terme « hug » a été saisi de manière automatique comme illustré en FIGURE 3 et le terme « granj » a été saisi automatiquement à la manière illustrée en FIGURE 4, c'est-à-dire par utilisation du curseur 402. La saisie automatique est déclenchée lorsque l'utilisateur sélectionne le curseur 402 à la position sélectionnée, c'est-à-dire quand il appuie sur le curseur à la position sélectionnée. Le point séparant les deux mots dans la zone de saisie 302 a été ajouté de manière manuelle par l'utilisateur, c'est-à-dire par sélection par l'utilisateur du point sur le clavier de la zone d'entrée 308.

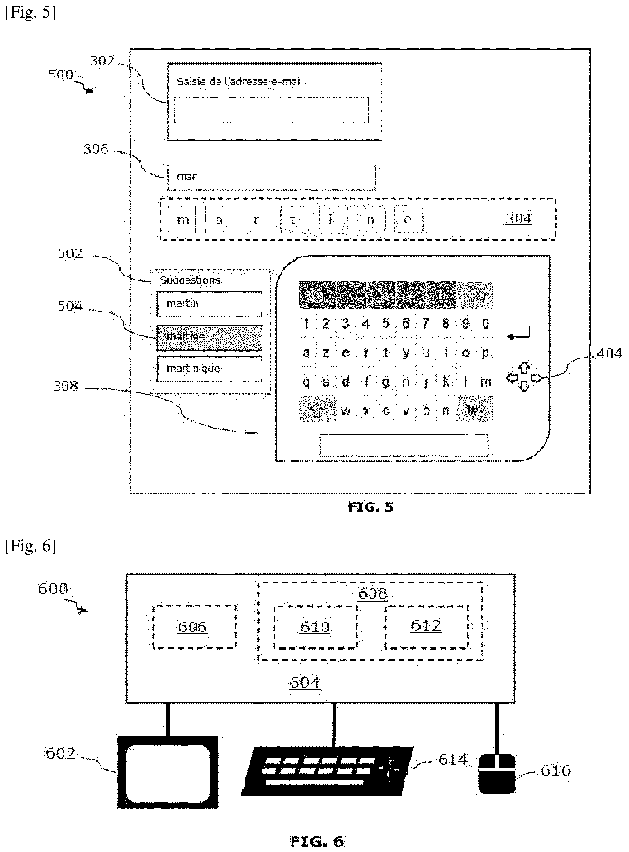

La FIGURE 5 est une troisième représentation schématique d'un exemple d'interface utilisateur 500 sur laquelle est mise en œuvre un procédé selon l'invention, tel que par exemple le procédé 100 ou 200 décrit plus haut.

L'interface utilisateur 500 de la FIGURE 5 comprend tous les éléments de l'interface utilisateur de la FIGURE 4.

Dans la zone de saisie préalable, seules la suite de caractères « mar » a été saisie à l'étape préalable 202.

L'interface 500 comprend une zone de suggestion 502 dans laquelle des mots sont suggérés en fonction de la suite de caractères saisie dans la zone de saisie préalable 306.

Le procédé mis en œuvre sur l'interface utilisateur 500 comprend une étape de saisie, par l'utilisateur, d'au moins un caractère dans la zone de saisie, et en ce qu'au moins un mot proposé est déduit à partir dudit au moins un caractère saisi.

De manière non limitative, la zone de suggestion 502 propose trois mots prédits ou déduits en fonction de la suite de caractères « mar ». Les trois mots proposés sont « martin », « martine », « martinique ». Les mots suggérés en FIGURE 5 sont affichés de manière sélectionnable, c'est-à-dire sous la forme d'un bouton sélectionnable, par l'utilisateur, au contact d'une partie du corps de l'utilisateur sur ledit bouton. De manière optionnelle, les mots suggérés sont affichés suivant une liste s'étendant verticalement sur l'interface utilisateur 500. Dans une variante non illustrée, les mots suggérés peuvent être affichés sous la forme d'une liste déroulante.

La sélection du mot suggéré peut être réalisée par sélection d'une position dans la liste, c'est-à-dire par sélection du mot suggéré dans la liste de suggestion affichée dans la zone de suggestion 502.

Optionnellement, cette sélection est effectuée par un curseur qui se déplace d'une position à l'autre dans la liste, c'est-à-dire d'un mot à l'autre dans la liste de suggestion grâce au clavier directionnel 404 ou mécanique.

De manière non limitative, le mot sélectionné 504 est le mot « martine ».

Lorsque l'utilisateur a sélectionné un des mots prédits dans la liste, le mot sélectionné est affiché dans la zone d'affichage 304. De manière optionnelle, le mot sélectionné est aussi affiché dans la zone de saisie préalable 306.

L'utilisateur peut ensuite effectuer l'étape de sélection 106 dans le mot affiché dans la zone de d'affichage 304 afin de saisir automatiquement le mot ou une portion du mot affiché.

Dans une variante non illustrée, l'utilisateur peut compléter manuellement ou automatiquement la zone d'affichage 304 avec d'autres mots. Ces mots peuvent, bien entendu :
- être saisis manuellement dans la zone de saisie préalable 306 via le clavier alphanumérique de la zone d'entrée, ou encore,
- en réalisant un début de saisie manuelle et en complétant la saisie par un ou plusieurs mots suggérés qui s'afficheront dans la zone de suggestion 502.

Optionnellement, les mots proposés sont enregistrés sur une base de données connectée audit ordinateur. Le procédé selon l'invention 100, 200 mis en œuvre sur l'interface utilisateur 500 est donc configuré pour réaliser une étape de récupération, avant l'étape d'affichage, des mots proposés sur la base de données sur laquelle sont enregistrées une multitude de mots, par exemple sous la forme d'un dictionnaire. L'étape de récupération est fonction des mots entrés par l'utilisateur dans la zone de saisie préalable 306.

La FIGURE 6 est une représentation schématique d'un exemple d'un équipement 600 selon l'invention.

L'équipement 600 comprend une interface utilisateur, telle que par exemple l'une quelconque des interfaces 300, 400 et 500, comprenant une zone de saisie et un dispositif 604 pour assister à la saisie automatique sur l'interface utilisateur 300, 400, 500.

L'interface utilisateur 300, 400, 500 de l'équipement 600 comprend un moyen d'affichage 602 agencé pour afficher l'interface utilisateur 300, 400, 500 décrite sur les FIGURES 3, 4, et 5. Le moyen d'affichage 602 est un écran. Le moyen d'affichage 602 peut être tactile.

L'interface utilisateur 300, 400, 500 de l'équipement 600 comprend un clavier alphanumérique 614 connecté au dispositif 604. Le clavier alphanumérique 614 est agencé pour saisir manuellement des caractères, par exemple dans la zone de saisie 302 et/ou de saisie préalable 306. Le clavier alphanumérique 614 peut être associé à la zone d'entrée 308 illustrée sur les FIGURES 3, 4 et 5. Le clavier alphanumérique 614 peut être tactile en étant directement compris dans le moyen d'affichage 602.

L'interface utilisateur 300, 400, 500 comprend un moyen pour sélection une position 616 dans l'au moins un mot proposé.

Le moyen pour sélectionner une position 616 peut être un pavé numérique, par exemple un pavé directionnel d'un clavier manuel ou tactile, ou une souris d'ordinateur, ou un curseur tactile se déplaçant au touché de l'utilisateur sur un écran tactile. Le moyen pour sélectionner une position 616 peut être associé au pavé directionnel 404 décrit en FIGURE 4.

De manière optionnelle, l'équipement 600 peut comprendre un moyen de stockage (non illustré) pour enregistrer les données saisies à l'étape préalable et/ou saisies automatiquement.

Le dispositif 604 est par exemple une unité de calcul 604. Le dispositif 604 peut être compris dans un ordinateur. Le dispositif 604 est agencé pour mettre en œuvre le procédé 100 ou 200 et comprend :
- un module d'affichage 606 configuré pour afficher l'au moins une chaîne de caractère, dit mot proposé, dans une zone d'affichage,
- un module de saisie 608 configuré pour saisir au moins une chaîne de plusieurs caractère.

Le module de saisie 608 comprend :
- un module de sélection 610 configuré pour sélectionner une position dans un mot proposé par un utilisateur, et
- un module de saisie automatique 612, configuré pour saisir automatiquement, dans la zone de saisie, tous les caractères se trouvant d'un côté ou de l'autre, de préférence à gauche ou à droite, de la position sélectionnée dans ledit mot proposé.

La saisie préalable suivant l'étape de saisie préalable du procédé 200 peut être réalisée avec le module de saisie 608 du dispositif 604.

De manière non limitative, le module de sélection 610 du dispositif 604 est agencé pour positionner un curseur dans le mot sélectionné, ladite position du curseur correspondant à la position sélectionnée dans ledit mot proposé. Le curseur peut être associé au curseur 402 décrit en FIGURE 4.

Le dispositif 604 peut aussi comprendre un module de communication (non illustré) agencé pour récupérer l'au moins un mot proposé sur une base de données. La base de données peut être enregistrée sur l'équipement, par exemple sur le moyen de stockage dudit équipement 600, ou sur un « Cloud » ou un réseau connecté audit équipement 600. Le module de communication peut comprendre une antenne WIFI ou Bluetooth ou un routeur ou une connexion à un serveur.

De préférence, le module de saisie 608 peut être configuré pour supprimer et/ou écrire un ou plusieurs caractères saisis automatiquement ou manuellement.

Optionnellement, le module de saisie 608 peut être agencé pour déduire au moins un mot proposé à partir d'au moins un caractère saisi par le module de saisie 608.

De préférence, le module de saisie 608 est configuré pour convertir :
- toutes les majuscules de l'au moins une chaîne de plusieurs caractères en minuscule, et/ou
- tous les caractères spéciaux de l'au moins une chaîne de plusieurs caractères en espace.

Chaque module peut être un moyen de calcul, tel qu'un processeur, agencé pour exécuter le programme informatique selon l'invention ou des lignes de commandes dédiées à l'étape ou l'opération à réaliser du procédé 100 ou 200.

Bien que représentés séparément, au moins deux des modules, en particulier tous les modules, peuvent être intégrés dans un même processeur.

Le dispositif 604 est agencé pour exécuter des instructions d'un programme informatique pour mettre en œuvre toutes les étapes du procédé tel que décrit dans les FIGURES 1, 2, 3, 4, et 5.

De manière non limitative, le programme informatique peut être rédigé en Python.

Bien entendu, l'invention n'est pas limitée aux exemples qui viennent d'être décrits. De nombreuses modifications peuvent être apportées à ces exemples sans sortir du cadre de la présente invention telle que décrite.

## Revendications

1. Procédé (100, 200), mis en œuvre par ordinateur, d'aide à la saisie automatique de chaînes de caractères sur une interface utilisateur (300, 400, 500) comprenant une zone de saisie (302, 306, 308), ledit procédé (100, 200) comprenant :
- l'affichage (102), dans une zone d'affichage (304), d'au moins une chaîne de plusieurs caractères, dite mot proposé,
- au moins une itération d'une étape, dite de saisie (104), comprenant les étapes :
∘ sélection (106), par un utilisateur, d'une position dans un mot proposé, et
∘ saisie automatique (108), dans la zone de saisie (302, 306, 308), de tous les caractères se trouvant d'un côté ou de l'autre de la position sélectionnée dans ledit mot proposé.

2. Procédé (100, 200) selon la revendication 1, **caractérisé en ce que** lorsque la position sélectionnée correspond à la position d'un caractère du mot affiché, alors l'étape de saisie automatique (108) comprend en outre une saisie dudit caractère sélectionné dans la zone de saisie (302).

3. Procédé (100, 200) selon l'une quelconque des revendications précédentes, **caractérisé en ce que**, chaque caractère du mot proposé est affiché de manière sélectionnable, et **en ce que** l'étape de sélection (106) d'une position dans le mot proposé comprend une sélection d'un caractère dudit mot proposé.

4. Procédé (100, 200) selon l'une quelconque des revendications précédentes, **caractérisé en ce que**, pour au moins une chaine de caractère, l'étape de sélection (106) d'une position dans le mot proposé comprend un positionnement d'un curseur (402) dans ledit mot proposé.

5. Procédé (100, 200) selon l'une quelconque des revendications précédentes, **caractérisé en ce qu'**il comprend plusieurs itérations de l'étape de saisie (104).

6. Procédé (200) selon l'une quelconque des revendications précédentes, **caractérisé en ce qu'**il comprend, avant l'étape d'affichage (102), une étape de saisie préalable (202), d'au moins un mot pouvant être affiché lors de l'étape d'affichage (102) en tant que mot proposé.

7. Procédé (100, 200) selon l'une quelconque des revendications précédentes, **caractérisé en ce qu'**il comprend, préalablement à l'étape d'affichage (102), une étape de saisie, par l'utilisateur, d'au moins un caractère dans la zone de saisie (302, 306), et **en ce qu'**au moins un mot proposé est déduit à partir dudit au moins un caractère saisi.

8. Procédé (100, 200) selon l'une quelconque des revendications précédentes, **caractérisé en ce qu'**il comprend une étape de récupération, avant l'étape d'affichage, de l'au moins un mot proposé sur une base de données.

9. Procédé (100, 200) selon l'une quelconque des revendications précédentes **caractérisé en ce que** le procédé (100, 200) comprend une étape de conversion :
- de toutes les majuscules de l'au moins une chaîne de plusieurs caractères en minuscule, et/ou
- de tous les caractères spéciaux de l'au moins une chaîne de plusieurs caractères en espace.

10. Procédé (100, 200) selon l'une quelconque des revendications précédentes, **caractérisé en ce que** qu'il comprend une étape manuelle de suppression et/ou de réécriture d'un ou plusieurs caractères saisis automatiquement à l'étape de saisie automatique.

11. Programme informatique comprenant des instructions exécutables par un dispositif de traitement de données, qui lorsqu'elles sont exécutées mettent en œuvre toutes les étapes du procédé (100, 200) selon l'une quelconque des revendications précédentes.

12. Dispositif (604) de traitement de données comprenant des moyens configurés pour mettre en œuvre toutes les étapes du procédé (100, 200) selon l'une quelconque des revendications 1 à 10.

13. Équipement comprenant :
- une interface utilisateur (300, 400, 500) pour la saisie de données, et
- un dispositif de traitement de données (604) comprenant des moyens configurés pour mettre en œuvre toutes les étapes du procédé (100, 200) selon l'une quelconque des revendications 1 à 10.
